# EUROPÄISCHE PATENTSCHRIFT

(11) **EP 2 443 984 B1**
(45) Veröffentlichungstag und Bekanntmachung des Hinweises auf die Patenterteilung: **17.06.2020**
(21) Anmeldenummer: 12000528.5
(22) Anmeldetag: 27.01.2012
(51) Int. Cl.: A47L 15/42, D06F 39/00, F28D 7/14, F28F 1/08, F28F 21/06

(54) **Koaxial-Wärmetauscher für ein Haushaltgerät**
Coaxial heat exchanger for a domestic appliance
Echangeur thermique coaxial pour un appareil ménager

(43) Veröffentlichungstag der Anmeldung: 25.04.2012
(73) Patentinhaber: V-Zug AG, 6300 Zug (CH)
(72) Erfinder: Loichinger, Albert Johann, 8135 Langnau am Albis (CH); Dober, Ernst, 6036 Dierikon (CH)
(74) Vertreter: Sutter, Kurt

(56) Entgegenhaltungen:
- EP-A1- 1 762 806
- EP-A1- 2 215 955
- EP-A2- 2 206 824
- CN-A- 101 776 405
- JP-A- 2006 078 017
- US-A1- 2002 157 815

## Beschreibung

### Gebiet der Erfindung

Die Erfindung betrifft einen Wärmetauscher für ein Haushaltsgerät mit einem Rohr zum Führen eines ersten Fluids und mit einer ausserhalb des Rohrs angeordneten Leitung zum Führen eines zweiten Fluids. Die Erfindung betrifft auch ein Haushaltsgerät mit einem Wärmetauscher dieser Art.

### Hintergrund

Ein Wärmetauscher dieser Art ist in EP 2 215 955 offenbart. Beim dort beschriebenen Haushaltsgerät ist im Bereich der Abwasserleitung ein Wärmetauscher vorgesehen, dessen Aufgabe es ist, Wärme aus dem Abwasser auszukoppeln. Koaxiale Wärmetauscher für Klimaanlagen sind auch in US 2002/0157815 A1 beschrieben.

Der Bau solcher Wärmetauscher ist allerdings aufwändig, insbesondere wenn sie nicht gerade, sondern gebogen, z.B. in Mäandern oder spiralförmig, verlaufen sollen.

### Darstellung der Erfindung

Es stellt sich deshalb die Aufgabe, einen Wärmetauscher bereitzustellen, der auch bei kompliziertem, gebogenen Verlauf einfach hergestellt werden kann.

Diese Aufgabe wird vom Wärmetauscher gemäss Anspruch 1 erfüllt. Demgemäss besitzt er ein Rohr zum Führen eines ersten Fluids sowie eine ausserhalb des Rohrs angeordnete Leitung zum Führen eines zweiten Fluids. Zwischen diesen Fluiden soll ein Wärme leitender Kontakt hergestellt werden. Anspruchsgemäss ist die Leitung ein flexibler Kunststoffschlauch, der einen Innenraum zur Aufnahme des zweiten Fluids bildet, und das Rohr verläuft im Innenraum. Um die Fluide auf einer oder auf beiden Seiten des Wärmetauschers zu entflechten, ist mindestens ein Anschlussstück vorgesehen, das ein Aussenrohr sowie ein Innenrohr aufweist. Das Innenrohr ist durch eine Wand des Aussenrohrs geführt. Dabei tritt das Innenrohr 24 im Bereich einer Biegung aus dem Aussenrohr 23 aus. Das oben erwähnte Rohr des Wärmetauschers ist am Innenrohr angeschlossen und der Kunststoffschlauch am Aussenrohr.

Unter einem flexiblen Kunststoffschlauch ist Kunststoffschlauch zu verstehen, der reversibel aus einer gestreckten Konfiguration in eine gebogene Konfiguration gebracht werden kann, wobei er in der gebogenen Konfiguration einen Krümmungsradius hat, der kleiner als sein fünffacher Aussendurchmesser ist. Beträgt der Durchmesser des Schlauchs also z.B. 4 cm, so kann der Schlauch aus der gestreckten Konfiguration ohne Werkzeug auf einen Krümmungsradius von 20 cm oder kleiner gekrümmt und sodann wieder gestreckt werden, ohne dass er dabei Schaden nimmt.

Diese Ausgestaltung des Wärmetauschers ist einfach herstellbar, indem der Schlauch den Biegungen des inneren Rohrs ohne Weiteres zu folgen vermag. Gleichzeitig wird ein guter Wärmeübergang erreicht, da das erste und das zweite Fluid lediglich durch die Wand des Rohrs voneinander getrennt sind. Durch das steife Innenrohr wird der äussere flexible Schlauch geführt und der äussere Schlauch kann nicht knicken.

In einer besonders vorteilhaften Ausführung ist der Kunststoffschlauch ein Wellschlauch. Derartige Schläuche können ohne zu knicken auf verhältnismässig kleine Radien gebogen werden. Zudem sind Wellschläuche preiswerte Standardbauteile.

Vorzugsweise sind das Innenrohr und das Aussenrohr des Anschlussstücks steif. Unter "steif" wird dabei ein Rohr verstanden, welches sich, wenn ein gerades Rohrstück aus demselben Material mit einer Wandstärke von mind. 10% vom Aussendurchmesser und einer Länge gleich 10% vom Durchmesser im Quadrat (für Länge und Durchmesser in Millimetern), an einem Ende eingespannt am anderen Ende mit einer Kraft von 100 N senkrecht zu seiner Längsrichtung beaufschlagt wird, um höchstens 0.5° auslenkt.

Vorzugsweise ist das Anschlussstück einstückig ausgestaltet, d.h. zwischen dem Innenrohr und dem Aussenrohr besteht ein Materialschluss, so dass die Durchführung eine hohe Dichtigkeit besitzt.

Alternativ kann das Anschlussstück auch aus einem Elastomer bestehen. Dieser kann durch Anspritzen, Anschweissen oder durch Klemmen an die Rohre befestigt werden.

Die Erfindung betrifft auch ein Haushaltgerät mit einem derartigen Wärmetauscher.

Vorzugsweise bildet das Rohr dabei mindestens einen Teil des Verdampfers oder Kondensators einer Wärmepumpe.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Schnitt durch einen Geschirrspüler,
Fig. 2 einen Schnitt durch einen Wärmetauscher und
Fig. 3 einen Schnitt durch das Anschlussstück des Wärmetauschers von Fig. 2.

### Wege zur Ausführung der Erfindung

In den Figuren wird die Erfindung in Form eines Geschirrspülers dargestellt. Der Wärmetauscher kann jedoch auch in anderen Haushaltgeräten eingesetzt werden, insbesondere in einer Waschmaschine.

Der dargestellte Geschirrspüler besitzt ein Gehäuse 1. Im Gehäuse 1 befindet sich ein Bottich 5, dessen Innenraum für den Benutzer über eine Benutzertüre 6 an der Vorderseite 7 des Geräts zugänglich ist. In diesem Bottich wird das Spülgut in bekannter Weise gereinigt.

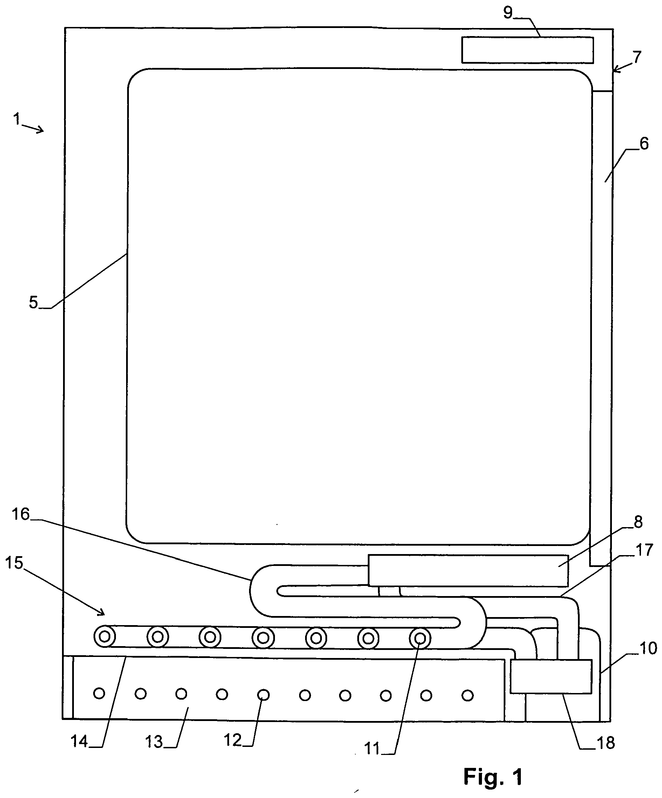

Weiter besitzt das Gerät ein Prozesswassersystem 8, das in Fig. 1 nur schematisch als Funktionsblock dargestellt ist. Es umfasst insbesondere eine Zirkulationspumpe sowie eine Abwasserpumpe. Erstere dient dazu, das Prozesswasser in einem Kreislauf umzupumpen, Zweitere dient dem Abführen von nicht mehr benötigtem Prozesswasser. Entsprechende Prozesswassersysteme sind für Geschirrspüler und Waschmaschinen bekannt, beispielsweise aus EP 2 206 824 und EP 2 215 955. Bei einem Geschirrspüler sind im Bottich 5 zudem in bekannter Weise Sprüharme (nicht gezeigt) vorgesehen, durch welche das Prozesswasser im Kreislauf gepumpt wird.

Weiter besitzt das Gerät eine Steuerung 9.

Im unteren Bereich des Geräts ist eine Wärmepumpe umfassend einen Kompressor 10, einen Kondensator 11, ein Expansionsventil (nicht gezeigt) sowie einen Verdampfer 12 vorgesehen.

Die Funktionsweise der Wärmepumpe entspricht im vorliegenden Beispiel im Wesentlichen jener gemäss EP 2 206 824, d.h. sie hat die Aufgabe, dem Prozesswasser bei Bedarf Wärme zuzuführen. Diese Wärme wird wie bei EP 2 206 824 einem Wassertank 13 entzogen. Hierzu steht der Tank 13 in thermischem Kontakt mit dem Verdampfer 12 der Wärmepumpe.

Oberhalb des Tanks 13 befindet sich der Kondensator 11. Vorzugsweise ist er vom Innenraum des Tanks 13 durch einen Deckel 14 getrennt. Der Deckel 14 kann wärmeisoliert sein. Der Kondensator 11 ist Teil eines über dem Tank 13 angeordneten Koaxial-Wärmetauschers 15, durch welchen Prozesswasser aus dem oberen Gehäuseteil geführt wird, um dieses Prozesswasser zu erwärmen. Schläuche 16, 17 dienen dazu, den Wärmetauscher 15 mit dem Prozesswassersystem 8 im oberen Gehäuseteil zu verbinden.

Weiter ist eine Pumpe 18 vorgesehen, welche dazu dient, das Prozesswasser zwischen oberem und unterem Gehäuseteil umzupumpen. Eine wichtige Aufgabe der Pumpe 18 ist es, Prozesswasser aus dem Wärmetauscher 15 nach oben zu fördern und den Wärmetauscher 15 so zu entleeren, um Standwasser zu vermeiden. Damit wird die Gerätehygiene verbessert und Geruchsbildung vermieden.

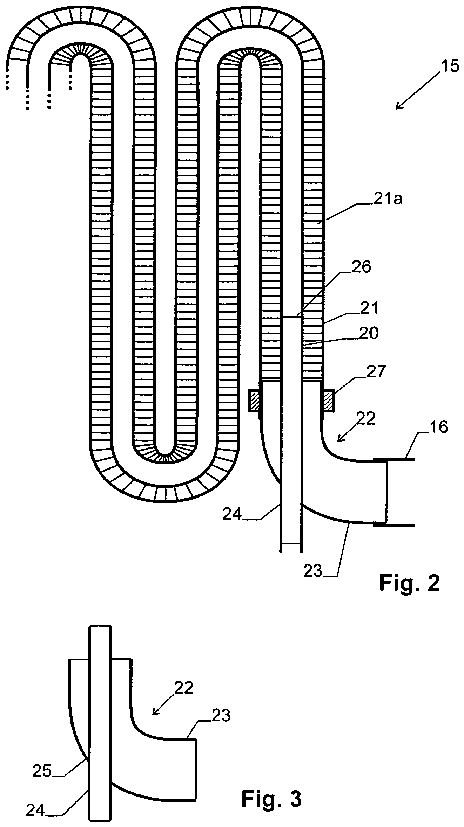

Der Aufbau des Wärmetauschers 15 ergibt sich aus Fig. 2. Er weist ein inneres Rohr 20 auf, welches gebogen verläuft, vorzugsweise in Mäanderform. Es führt das Fluid der Wärmepumpe und bildet dessen Kondensator. Es steht unter einem Druck von mehr als 10 Bar, z.B. 20 Bar. Um einen guten Wärmeübergang zu gewährleisten und dem Druck des Fluids zu widerstehen, ist es vorteilhaft aus Metall, insbesondere aus Kupfer, Aluminium oder Edelstahl.

Das Rohr 20 verläuft im Innenraum 21a eines Kunststoffschlauchs 21. Der Kunststoffschlauch 21 führt im Innenraum 21a Prozesswasser des Haushaltgeräts, das unter wesentlich geringerem Druck von z.B. 0.5 Bar steht.

Wie oben erwähnt, ist der Schlauch 21 flexibel, so dass er ohne spezielle Bearbeitung den Biegungen des Rohrs 20 zu folgen vermag. Vorteilhaft handelt es sich aus den oben genannten Gründen um einen Wellschlauch. Sein Mantel besteht aus einer Kunststoffmembran, welche quer zur Rohrlängsrichtung gewellt ist, so dass er gestreckt, gestaucht und insbesondere gebogen werden kann. Im entspannten Zustand besitzt der Schlauch 21 vorzugsweise runden Querschnitt, ebenso wie das Rohr 20.

An mindestens einem Ende des Wärmetauschers 15, vorzugsweise an beiden Enden, ist ein Anschlussstück 22 vorgesehen, welches die Entflechtung von Wasser und Wärmepumpenfluid erlaubt. Fig. 2 zeigt dieses Anschlussstück in eingebautem Zustand und Fig. 3 als Einzelteil.

Das Anschlussstück 22 besteht aus einem vorzugsweise steifen Aussenrohr 23 sowie aus einem ebenfalls vorzugsweise steifen Innenrohr 24. Das Innenrohr 24 wird durch einen Wandabschnitt 25 des Aussenrohrs 23 nach aussen geführt. Vorzugsweise bestehen das Aussenrohr 23 und das Innenrohr 24 aus dem gleichen Material, insbesondere Metall. Insbesondere ist das Anschlussstück einstückig ausgeführt. Es kann z.B. als Spritzgussteil oder geschweisstes Teil vorgefertigt werden.

Das Aussenrohr 23 ist dicht mit dem Schlauch 21 verbunden, das Innenrohr 24 mit dem Rohr 20.

Das Innenrohr 24 und das Rohr 20 bestehen vorteilhaft aus dem gleichen Material und sie können z.B. an einer Stossstelle 26 miteinander verschweisst sein, wodurch eine dichte, druckfeste Verbindung geschaffen wird.

Der Schlauch 21 ist über ein Ende des Aussenrohrs 23 gestülpt und an diesem mit einer Schlauchklemme 27 festgemacht.

Alternativ kann das Aussenrohr 23 auch aus einem weichen Elastomer oder gummiartigen Werkstoff hergestellt werden. Dieser kann durch Anspritzen, Schweissen oder Klemmen an den Rohren 21 und 24 befestigt werden.

In der in Fig. 2 und 3 dargestellten Ausführung des Anschlussstücks verläuft das Innenrohr 24 gerade und das Aussenrohr 23 besitzt eine Biegung oder Krümmung, wobei das Innenrohr 24 im Bereich der Biegung aus dem Aussenrohr 23 austritt. Grundsätzlich kann das Aussenrohr auch geknickt und nicht gekrümmt verlaufen, aber eine gekrümmte Bahn wird bevorzugt, da dadurch die Gefahr von Materialablagerungen reduziert wird.

Grundsätzlich können Abstandshalter zwischen dem Rohr 20 und dem Schlauch 21 angeordnet. Vorzugsweise wird auf deren Einsatz zwischen den Anschlussstücken jedoch verzichtet, weil in diesem Falle der Schlauch bei Bedarf oder auch im normalen Betrieb (z.B. aufgrund von Pumpenvibrationen) gegen das Rohr 20 bewegt werden kann bzw. bewegt wird, wodurch Verstopfungen behoben und/oder eine Gefahr der Bildung derselben reduziert werden können und die Abstandshalter führen zu Druckverlusten.

In der hier beschriebenen Ausführung ist der Koaxialwärmetauscher im Bereich des Kondensators der Wärmepumpe angeordnet. Ein Wärmetauscher dieser Art kann z.B. aber auch im Bereich des Verdampfers verwendet werden, z.B. um dem Abwasser in der in EP 2 215 955 beschriebenen Weise Wärme zu entziehen. In diesem Falle bildet das Rohr 20 mindestens einen Teil des Verdampfers der Wärmepumpe.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Wärmetauscher für ein Haushaltsgerät mit einem Rohr (20) zum Führen eines ersten Fluids und mit einer ausserhalb des Rohrs (20) angeordneten Leitung zum Führen eines zweiten Fluids, wobei die Leitung ein flexibler Kunststoffschlauch (21) ist, der einen Innenraum (21a) zur Aufnahme des zweiten Fluids bildet, und wobei das Rohr (20) im Innenraum (21a) verläuft, **dadurch gekennzeichnet, dass** der Wärmetauscher mindestens ein Anschlussstück (22) zum Entflechten der Fluide aufweist, wobei das Anschlussstück (22) ein Aussenrohr (23) sowie ein Innenrohr (24) aufweist, wobei das Innenrohr (24) durch eine Wand des Aussenrohrs (23) geführt ist, und wobei das Rohr (20) am Innenrohr (24) und der Kunststoffschlauch (21) am Aussenrohr (23) angeschlossen sind und wobei das Innenrohr (24) gerade verläuft und das Aussenrohr (23) eine Biegung besitzt, wobei das Innenrohr (24) in einem Bereich (25) der Biegung aus dem Aussenrohr (23) austritt.

2. Wärmetauscher nach Anspruch 1, wobei der Kunststoffschlauch (21) ein Wellschlauch ist.

3. Wärmetauscher nach Anspruch 1, wobei das Innenrohr (24) und das Aussenrohr (23) steif sind.

4. Wärmetauscher nach einem der Ansprüche 1 bis 3, wobei das Anschlussstück (22) aus dem gleichen Material wie das Rohr (20) ist.

5. Wärmetauscher nach einem der Ansprüche 1 bis 4, wobei das Rohr (20) mit dem Innenrohr (24) verschweisst ist.

6. Wärmetauscher nach einem der Ansprüche 1 bis 5, wobei das Anschlussstück (22) aus Metall ist.

7. Wärmetauscher nach einem der Ansprüche 1 bis 6, wobei das Anschlussstück (22) einstückig ausgestaltet ist.

8. Wärmetauscher nach einem der vorangehenden Ansprüche, wobei das Rohr (20) aus Metall ist.

9. Wärmetauscher nach einem der vorangehenden Ansprüche, wobei zwischen dem Rohr (20) und dem Kunststoffschlauch (21) keine Abstandshalter vorgesehen sind.

10. Haushaltsgerät mit einem Wärmetauscher nach einem der vorangehenden Ansprüche.

11. Haushaltgerät nach Anspruch 10, wobei das Haushaltgerät eine Wärmepumpe (10, 11, 12) mit einem Kompressor (10), einem Verdampfer (11) und einem Kondensator (12) aufweist, wobei das Rohr (20) mindestens einen Teil des Verdampfers (11) oder des Kondensators (12) ist.

12. Haushaltgerät nach einem der Ansprüche 10 oder 11, wobei im Innenraum (21a) des Kunststoffschlauchs (21) Prozesswasser geführt ist.

## Claims

1. Heat exchanger for a home appliance with a pipe (20) for conducting a first fluid and with a conduit arranged outside the pipe (20) for conducting a second fluid, wherein the conduit is a flexible plastic hose (21) which forms an interior space (21a) for receiving the second fluid and wherein the pipe (20) extends inside the interior space (21a), **characterised in that** the heat exchanger has at least one connecting piece (22) for disentangling the fluids, wherein the connection piece (22) comprises an outer pipe (23) and an inner pipe (24), wherein the inner pipe (24) is guided through a wall of the outer pipe (23), and wherein the pipe (20) is connected to the inner pipe (24) and the plastic hose (21) is connected to the outer pipe (23), and wherein the inner pipe (24) runs straight and the outer pipe (23) has a bend, wherein the inner pipe (24) emerges from the outer pipe (23) in a region (25) of the bend.

2. Heat exchanger according to claim 1,
wherein the plastic hose (21) is a corrugated hose.

3. Heat exchanger according to claim 1,
wherein the inner pipe (24) and the outer pipe (23) are rigid.

4. Heat exchanger according to one of claims 1 to 3, wherein the connecting piece (22) is made of the same material as the pipe (20).

5. Heat exchanger according to one of claims 1 to 4, wherein the pipe (20) is welded to the inner pipe (24) .

6. Heat exchanger according to one of claims 1 to 5, wherein the connection piece (22) is made of metal.

7. Heat exchanger according to one of claims 1 to 6, wherein the connection piece (22) is designed in one piece.

8. Heat exchanger according to one of the preceding claims, wherein the pipe (20) is made of metal.

9. Heat exchanger according to one of the preceding claims, wherein no spacers are provided between the pipe (20) and the plastic hose (21).

10. Home appliance with a heat exchanger according to one of the preceding claims.

11. Home appliance according to claim 10,
wherein said home appliance comprises a heat pump (10, 11, 12) with a compressor (10), an evaporator (11) and a condenser (12), wherein the pipe (20) is at least a part of the evaporator (11) or the condenser (12).

12. Home appliance according to one of claims 10 or 11, wherein process water is conducted in the interior (21a) of the plastic hose (21).

## Revendications

1. Échangeur de chaleur pour un appareil ménager avec un tuyau (20) pour guider un premier fluide et avec un conduit, disposé à l'extérieur du tuyau (20), pour guider un deuxième fluide, dans lequel
le conduit est un tuyau en matière plastique (21) flexible, qui forme un espace intérieur (21a) pour recevoir le deuxième fluide, et
dans lequel le tube (20) s'étend dans l'espace intérieur (21a), **caractérisé en ce que**
l'échangeur de chaleur présente au moins une pièce de raccordement (22) pour séparer les fluides, dans lequel la pièce de raccordement (22) présente un tube extérieur (23) ainsi qu'un tube intérieur (24), dans lequel le tube intérieur (24) est guidé à travers une paroi du tube extérieur (23), et dans lequel le tube (20) est raccordé au tube intérieur (24) et le tuyau en matière plastique (21) est raccordé au tube extérieur (23)et dans lequel le tube intérieur (24) s'étend de manière rectiligne et le tube extérieur (23) possède un cintrage, dans lequel le tube intérieur (24) sort du tube extérieur (23) dans une zone (25) du cintrage.

2. Échangeur de chaleur selon la revendication 1, dans lequel le tuyau en matière plastique (21) est un tuyau ondulé.

3. Échangeur de chaleur selon la revendication 1, dans lequel le tube intérieur (24) et le tube extérieur (23) sont rigides.

4. Échangeur de chaleur selon l'une quelconque des revendications 1 à 3, dans lequel la pièce de raccordement (22) est composée du même matériau que le tuyau (20).

5. Échangeur de chaleur selon l'une quelconque des revendications 1 à 4, dans lequel le tube (20) est soudé au tube intérieur (24).

6. Échangeur de chaleur selon l'une quelconque des revendications 1 à 5, dans lequel la pièce de raccordement (22) est en métal.

7. Échangeur de chaleur selon l'une quelconque des revendications 1 à 6, dans lequel la pièce de raccordement (22) est configurée d'un seul tenant.

8. Échangeur de chaleur selon l'une quelconque des revendications précédentes, dans lequel le tube (20) est en métal.

9. Échangeur de chaleur selon l'une quelconque des revendications précédentes, dans lequel aucun écarteur n'est prévu entre le tube (20) et le tuyau en matière plastique (21).

10. Appareil ménager avec un échangeur de chaleur selon l'une quelconque des revendications précédentes.

11. Appareil ménager selon la revendication 10, dans lequel l'appareil ménager présente une pompe à chaleur (10, 11, 12), avec un compresseur (10), un évaporateur (11) et un condensateur (12), dans lequel le tube (20) est au moins une partie de l'évaporateur (11) ou du condensateur (12).

12. Appareil ménager selon l'une quelconque des revendications 10 ou 11, dans lequel de l'eau de traitement est guidée dans l'espace intérieur (21a) du tuyau en matière plastique (21).
